# EUROPÄISCHE PATENTSCHRIFT

(11) **EP 3 010 678 B1**
(45) Veröffentlichungstag und Bekanntmachung des Hinweises auf die Patenterteilung: **18.04.2018**
(21) Anmeldenummer: 14737164.5
(22) Anmeldetag: 11.06.2014
(51) Int. Cl.: B23K 9/08

(54) **SCHWEISSEINRICHTUNG UND SCHWEISSVERFAHREN ZUM SCHWEISSEN VON WERKSTÜCKEN MIT EINEM UMLAUFEND BEWEGTEN LICHTBOGEN UNTER ERWÄRMEN DER WERKSTÜCKE NACH DEM SCHWEISSEN**
WELDING DEVICE AND WELDING METHOD FOR WELDING WORKPIECES USING A ROTATING ELECTRIC ARC WITH HEATING OF THE WORKPIECES AFTER WELDING
DISPOSITIF DE SOUDAGE ET PROCÉDÉ DE SOUDAGE DE PIÈCES AU MOYEN D'UN ARC ÉLECTRIQUE TOURNANT ET MAGNÉTIQUEMENT MOBILE AVEC CHAUFFAGE DES PIÈCES APRES SOUDAGE

(30) Priorität: 18.06.2013 DE 202013102617 U
(43) Veröffentlichungstag der Anmeldung: 27.04.2016
(73) Patentinhaber: KUKA Industries GmbH, 86165 Augsburg (DE)
(72) Erfinder: HERRICH, Jörg, 86415 Mering (DE)
(74) Vertreter: Ernicke, Klaus Stefan
(86) Internationale Anmeldenummer: PCT/EP2014/062078
(87) Internationale Veröffentlichungsnummer: WO 2014/202439

(56) Entgegenhaltungen:
- WO-A1-2009/130131
- DE-A1- 19 901 081
- JP-A- S5 614 075

## Beschreibung

Die Erfindung betrifft eine Schweißeinrichtung und ein Schweißverfahren mit den Merkmalen im Oberbegriff der Ansprüche 1 und 6 (siehe z.B. WO2009/130 131 A1). Aus der EP 0 288 911 A1 und der DE 41 35 882 A1 sind Schweißeinrichtungen zum Schweißen von Werkstücken mit einem umlaufenden, magnetisch bewegten Lichtbogen bekannt. Die Schweißeinrichtung weist eine steuerbare Vorschubeinrichtung für mindestens ein Werkstück sowie eine Stromquelle und eine Treibeinrichtung für den Lichtbogen auf. Zum Schweißen werden die von der Stromquelle mit Spannung beaufschlagten und elektrisch leitenden Werkstücke mit ihren Stirnrändern zunächst in Kontakt gebracht und dann wieder ein Stück axial distanziert, wobei ein Lichtbogen gezündet wird, der von der Treibeinrichtung mittels eines über Spulen erzeugten Magnetfelds entlang der Werkstückränder umlaufend angetrieben wird. Der Lichtbogen schmilzt die Werkstückränder und die anschließenden Werkstückbereiche auf. Anschließend werden von der Vorschubeinrichtung die Werkstücke wieder in Kontakt gebracht und gestaucht, wobei unter Ausformung eines Wulstes die Schweißverbindung am Kontakt- und Fügebereich geschaffen wird.

Aus der JP S56 14075 ist eine Schweißeinrichtungen zum Schweißen von Werkstücken mit einem umlaufenden, magnetisch bewegten Lichtbogen bekannt, bei der die Werkstücke vor dem Schweißen mit einer induktiven Heizeinrichtung erwärmt werden.

Die vorbekannten Schweißeinrichtungen und Schweißprozesse sind für eine große Bandbreite von Werkstoffen und Wandstärken von Werkstücken geeignet. Bei modernen hochfesten Stählen und sehr dünnen Wandstärken und insbesondere auch bei Werkstückpaarungen mit großen Unterschieden in den Wandstärken und im Werkstoff, insbesondere in dessen Schmelzverhalten, sind die vorbekannten Schweißeinrichtungen und Schweißprozesse nicht immer optimal geeignet.

Es ist Aufgabe der vorliegenden Erfindung, eine verbesserte Schweißtechnik zum Schweißen mit einem umlaufend bewegten Lichtbogen aufzuzeigen.

Die Erfindung löst diese Aufgabe mit den Merkmalen der Ansprüche 1 und 6. Die beanspruchte Schweißtechnik, d.h. die Schweißeinrichtung und das Schweißverfahren, erlauben auch bei schwierigen Werkstückpaarungen mit sehr großen Unterschieden in der Wandstärke und/oder dem Werkstoff optimale Schweißergebnisse zu erreichen. Insbesondere kann das Temperatur- und Abkühlverhalten der Werkstücke in der Schweißpaarung gezielt beeinflusst und gesteuert oder ggf. auch geregelt werden. Hierdurch kann gezielt Einfluss auf die Gefügeausbildung der bevorzugt metallischen Werkstücke im Fügebereich genommen werden.

Mit der beanspruchten Schweißtechnik lassen sich die gewünschten Schweißnahteigenschaften reproduzierbar erzielen. Insbesondere können die Werkstoffeigenschaften der geschweißten Werkstücke eingestellt werden. Dies ist zumindest im Füge- bzw. Schweißnahtbereich möglich. Insbesondere die Festigkeit, die Duktilität oder Zähigkeit sowie die Härte können gesteuert werden.

Die Einbringung der zum Schweißen erforderlichen Energie kann optimal auf den Energieeintrag vom Lichtbogen und von der zusätzlichen Erwärmungseinrichtung verteilt werden. Gegenüber den vorbekannten Schweißverfahren kann insbesondere der Energieeintrag über den Lichtbogen reduziert werden. Hierdurch können Tropfen- und Spritzerbildungen vermieden werden. Es genügt ein Energieeintrag, mit dem an den zu fügenden Werkstückrändern eine dünne Schmelze gebildet wird. Eine Tiefenerwärmung des oder der Werkstücke ist nicht mehr erforderlich. Die zusätzliche Erwärmungseinrichtung verhindert ein vorschnelles Abkühlen der Werkstücke bei und nach dem Stauchen.

Ferner werden die Findung und Optimierung der Schweißparameter vereinfacht. Der bisher erforderliche Kompromiss zwischen notwendiger Energieeinbringung und abschmelzendem Material kann entfallen oder gemindert werden. Beim Stand der Technik musste die Lichtbogenbrennzeit relativ lang gewählt werden, damit genügend Wärme in den Werkstücken gepuffert wird. Dabei war der Schweißstrom nur relativ niedrig, was sich ungünstig auf die Lichtbogenbahn auswirken konnte. Trotzdem führte verringerter Strom immer noch zu erhöhtem Aufkommen an Schmelze, was den Prozess in Form von Schmelzbrücken und folglich Kurzschlüssen negativ beeinflussen oder stören konnte. Auch das Aussehen der Wulste war ungünstig, da die Schmelzetropfen daran erstarren konnten. Das war z.B. für die spanende Nachbearbeitung ungüstig, da der unterbrochene Schnitt die Standzeit der Schneidwerkzeuge erheblich reduzierte.

Der verringerte Energieeintrag durch den Lichtbogen und die verkürzte Wirkzeit des Lichtbogens haben ferner den Vorteil, dass die Werkstückränder ihre vorgegebene Oberflächenform, insbesondere eine plane Stirnseite, weitestgehend behalten können. Ein Abrunden der Werkstückränder kann verhindert werden. Dies ist auch günstig für die Verringerung von Werkstückverformungen und Querkräften beim Stauchen. Durch die zusätzliche Erwärmung des Fügebereichs besteht außerdem mehr Zeit für den Abbau innerer Spannungen. Es können Wirkungen wie bei einem Glühprozess, z.B. einem Normalisierungsglühen, erzielt werden.

Die geschweißten Werkstücke haben einen besseren, insbesondere reproduzierbaren und gleichmäßigeren, Rundlauf und auch eine bessere Maßhaltigkeit. Der Nachbearbeitungsaufwand kann deutlich reduziert werden. Insbesondere können durch die dünne Schmelzezone die Wulstbildungen verkleinert und die Werkstückverkürzungen reduziert werden. Die exakte Einstellung der gewünschten Gesamtlänge des geschweißten Werkstücks kann ohne nachteiligen Einfluss auf die Schweißqualität und die Gefügeausbildung innerhalb des Schweißprozesses und in der Schweißeinrichtung vorgenommen werden. Insbesondere ist ein Nachsetzen bei der zusätzlichen Erwärmung möglich.

Weitere Vorteile sind eine Vermeidung von Rissen am geschweißten Werkstück, eine homogene Wärmeführung, minimale Streckenenergie, Verringerung von Tropfen- und Spritzerbildung nebst Wartungsaufwand und ein exzellenter technischer und wirtschaftlicher Wirkungsgrad, insbesondere hinsichtlich Energieeinsatz, Bau- und Kostenaufwand sowie Schweißzeit.

Ferner können glattere und gratfreiere Wulste erzielt und der Nachbearbeitungsaufwand reduziert werden. Gegenüber dem Stand der Technik ist die verfügbare Palette schweißbarer Werkstoffe und Werkstückgeometrien wesentlich vergrößert. Das Schmelzverhalten der Werkstoffe kann extrem unterschiedlich sein. Die beanspruchte Schweißtechnik bietet hierfür sogar eine Eigenkompensation.

Bei der erfindungsgemäßen Schweißtechnik dient der Lichtbogen vorrangig zur Bildung einer optimalen Schmelze, wobei die zusätzliche Erwärmung der verbundenen Werkstücke für die Wärme- und Energiesteuerung optimal ist. Die Schmelzebildung kann vor allem auch zur Nahtreinigung verwendet werden, wobei Werkstoffverunreinigungen beim Stauchen mit der Schmelze aus dem Fügebereich nach außen in einen Wulst verdrängt werden, der anschließend entfernt werden kann. Durch den Lichtbogen werden die Werkstückränder getrennt voneinander aufgeschmolzen, wodurch Werkstoffvermischungen bei der Schmelzebildung vermieden werden können. Im eigentlichen Füge- und Schweißbereich der Werkstücke liegen nach der Wulstbildung und dem Schmelzeaustrieb eine optimale Werkstoffzusammensetzung sowie ein optimales Gefüge vor.

Die reduzierte Schmelzebildung hat insbesondere bei kohlenstoffhaltigen Eisenguss-Werkstoffen, z.B. Grauguss mit lamellarem Graphit, werkstofftechnische Vorteile. Die Bildung bzw. der Verbleib von meistens unerwünschtem Ledeburit im Füge- bzw. Nahtbereich kann zuverlässig verhindert werden.

Die erfindungsgemäße Schweißtechnik hat besondere Vorteile für eine hohe Maßhaltigkeit der geschweißten Werkstücke, insbesondere hinsichtlich der Werkstücklänge. Beim Stauchen und bei der erfolgenden zusätzlichen Erwärmung kann über den Vorschub die Bauteilverkürzung exakt eingestellt werden.

Die erfindungsgemäße Schweißtechnik ist für eine große Bandbreite von Werkstoffen und Werkstückgeometrien geeignet. Hierfür eignen sich elektrisch leitende Werkstoffe, insbesondere metallische Werkstoffe. Dies können insbesondere Stähle, aber auch Gusswerkstoffe oder Sinterwerkstoffe sein.

Als zusätzliche Erwärmungseinrichtung eignet sich gemäß der Erfindung eine weitere Stromquelle, insbesondere eine Gleichstromquelle. Sie kann parallel zur Stromquelle für den Lichtbogen geschaltet sein und die gleiche Polung aufweisen. Für die zusätzliche Stromquelle eignen sich z.B. Mittelfrequenz-Gleichstromquellen, wie sie beim elektrischen Widerstandspunktschweißen eingesetzt werden.

Dies verringert die Kosten, bietet eine große technische Reife bei hoher Verfügbarkkeit und ist
automatisierungsfreundlich. Der Schalt- und Steueraufwand ist gering, wobei die Stromquelle skalierbar und an unterschiedliche Anwendungen adaptierbar ist.

Die durch den Lichtbogen erwärmten und anschließend kontaktierten und gestauchten Werkstückränder haben insbesondere im ringförmigen Naht- oder Fügebereich einen höheren elektrischen Widerstand als die anderen Werkstückbereiche, sodass der Fügebereich durch Stromumwandlung gezielt beheizt werden kann. Über die Dauer und die Höhe des Stroms bzw. über die zusätzliche Stromquelle können dabei Zeit und Temperatur am Fügebereich gezielt beeinflusst, insbesondere gesteuert oder ggf. auch geregelt werden.

Bei dieser Art des elektrischen Widerstandsschweißens mit konduktiver Erwärmung der verbundenen Werkstücke ergeben sich in Verbindung mit der Lichtbogenerwärmung besondere Vorteile für einen gleichmäßigen und optimal steuerbaren Energie- bzw. Wärmeeintrag. Dies ist insbesondere für Werkstückpaarungen mit stark unterschiedlichem Schmelzverhalten der Werkstücke von Vorteil. Das unter Lichtbogeneinfluss schneller schmelzende Werkstück bildet zwar eine dickere Schmelzeschicht aus. Es hat anderseits aber i.d.R. einen geringeren elektrischen Widerstand und eine geringere konduktive Aufheizung als das andere langsamere schmelzende Werkstück, welches sich durch den höheren elektrischen Widerstand stärker erwärmt. Ein solches unterschiedliches Schmelzverhalten kann durch unterschiedliche Werkstoffe und/oder unterschiedliche Wandstärken entstehen.

Die beanspruchte kombinative Schweißtechnik nutzt Vorteile vorbekannter Schweißverfahren und vermeidet zugleich deren Nachteile.

Gegenüber dem vorbekannten Schweißen von Werkstücken nur mit dem bewegten Lichtbogen und anschließendem Stauchen können die Energieeinbringung reduziert und unerwünschte Prozessbeeinflussungen, insbesondere Kurzschlüsse, durch starke Schmelzebildung, speziell bei großen Wandstärkeunterschieden, vermieden werden. Andererseits kann die schnelle Randerwärmung und Schmelzebildung durch den Lichtbogen optimal genutzt werden.

Im Vergleich mit dem elektrischen Widerstands-Pressstumpfschweißen werden die Nachteile einer langen Aufheizdauer mit ggf. unerwünschten Werkstoffvermischungen bei der Schmelzebildung und das Auftreten von Gefügestörungen im Fügebereich durch Oxide oder dgl. Verunreinigungen sowie Kontaktprobleme bzw. der hohe Vorbereitungsaufwand an den Fügeflächen beseitigt. Andererseits werden die Vorteile einer besseren Temperaturführung und Verkürzungssteuerung sowie Maßhaltigkeit der Werkstücke genutzt.

In den Unteransprüchen sind weitere vorteilhafte Ausgestaltungen der Erfindung angegeben.

Die Erfindung ist in den Zeichnungen beispielhaft und schematisch dargestellt. Im einzelnen zeigen:
- Figur 1:: eine schematische Darstellung einer Schweißeinrichtung und
- Figur 2:: eine schematische Darstellung von Teilen der Schweißeinrichtung mit verbundenen Werkstücken und einem Fügebereich.

Die Erfindung betrifft eine Schweißeinrichtung (1) und ein Schweißverfahren zum Schweißen von Werkstücken(2,3).

Der Energieeintrag zum Schweißen der Werkstücke (2,3) erfolgt zum einen durch einen umlaufenden bewegten Lichtbogen (4) zwischen den einander zugekehrten stirnseitigen Werkstückrändern (19,20) der Werkstücke (2,3) und zum anderen durch eine zusätzliche Erwärmungseinrichtung (13). Diese bewirkt bevorzugt eine konduktive Erwärmung der verbundenen Werkstücke (2,3) durch einen elektrischen Stromfluss.

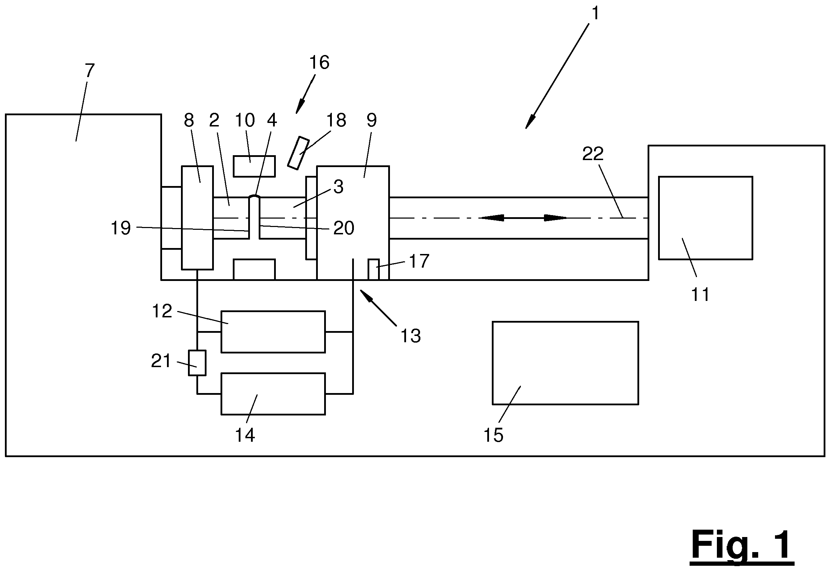

Figur 1 zeigt den schematischen Aufbau einer Schweißeinrichtung (1). Diese weist ein Maschinengestell (7) auf, an dem Einspannungen (8,9) für das jeweilige Werkstück (2,3) angeordnet sind. Im gezeigten Ausführungsbeispiel werden zwei Werkstücke (2,3) geschweißt und sind in jeweils einer Einspannung (8,9) aufgenommen. Sie können längs einer zentralen Achse (22) relativ zueinander in gesteuerter oder geregelter Weise relativ zueinander bewegt werden.

Die eine Einspannung (8) für das Werkstück (2) kann stationär angeordnet sein. Sie kann alternativ beweglich, insbesondere drehbeweglich um die Achse (22) am Maschinengestell (7) angeordnet und ggf. mit einem entsprechenden steuerbaren Antrieb verbunden sein.

Die andere Einspannung (9) für das Werkstück (3) ist längs der Achse (22) verschieblich am Maschinengestell (7) angeordnet und mit einer steuerbaren oder regelbaren Vorschubeinrichtung (11) verbunden. Hierdurch kann die Einspannung (9) mit dem eingespannten Werkstück (3) in Achsrichtung vor- und zurückbewegt sowie gegenüber dem anderen Werkstück (2) angenähert und distanziert werden.

Alternativ oder zusätzlich kann die eine Einspannung (8) eine solche Vorschubeinrichtung haben. Auch eine gemeinsame steuerbare oder regelbare Vorschubeinrichtung (11) für beide Einspannungen (8,9) ist möglich.

Die Werkstücke (2,3) bestehen aus einem elektrisch leitenden Material. Dies ist vorzugsweise ein metallischer Werkstoff, insbesondere ein Eisen- oder Nichteisenmetall. Hierbei eignen sich z.B. eisenhaltige Stähle, Eisengussmaterialien, ggf. mit Grafit. Andere geeignete Werkstoffe sind Nichteisenmetalle, z.B. Kupfer, Messing, Bronze, Leichtmetalllegierungen mit Aluminium, Magnesium oder dgl.. Ferner sind Sinterwerkstoffe aus Metall oder mit metallischen Einschlüssen geeignet. Elektrisch leitende Werkstoffe können auch Verbundwerkstoffe mit eingelagerten oder aufgebrachten elektrisch leitenden Materialien, insbesondere Metallen, sein.

Die Werkstücke (2,3) sind vorzugsweise als Hohlkörper, insbesondere als Rohre, ausgebildet. Sie können eine beliebige Querschnittsform, z.B. kreisrund, oval, prismatisch oder dgl. haben. Die Wandstärken der Rohre können gleich oder unterschiedlich sein. Alternativ kann eines der Werkstücke (2,3) massiv ausgebildet sein.

Die Werkstücke (2,3) sind längs der Achse (22) passend, insbesondere fluchtend, zueinander ausgerichtet und haben einander zugekehrte bzw. benachbarte Stirnränder (19,20).

Die Schweißeinrichtung (1) weist zur Erzeugung des in Figur 1 angedeuteten Lichtbogens (4) zwischen den Werkstücken (2,3) eine elektrische Stromquelle (12) und eine Treibeinrichtung (10) für den Lichtbogen (4) auf. Die Stromquelle (12) ist mit den eingespannten Werkstücken (2,3) elektrisch leitend verbunden. Hierfür können z.B. die Einspannungen (8,9) Elektroden bilden, wobei sie als elektrisch leitende, insbesondere metallische, Spannvorrichtungen ausgebildet und mit der Stromquelle (12) verbunden sind. Alternativ können die Werkstücke (2,3) auf andere Weise, z.B. durch separate Kontakte oder dgl., mit der Stromquelle (12) verbunden und mit Spannung beaufschlagt werden. Die Stromquelle (12) ist vorzugsweise eine Gleichstromquelle.

Die Treibeinrichtung (10) treibt den Lichtbogen (4) an und lässt ihn an den axial distanzierten Werkstückrändern (19,20) um die Achse (22) umlaufend rotieren. Der Antrieb kann z.B. durch ein Magnetfeld erzeugt werden, wobei die Treibeinrichtung (10) eine entsprechende Spulenanordnung aufweist.

Zur Erzeugung des Lichtbogens (4) werden die Werkstücke (2,3) miteinander durch die Vorschubeinrichtung (11) in Kontakt gebracht, von der Stromquelle (12) mit Spannung beaufschlagt und dann wieder durch die Vorschubeinrichtung (11) ein Stück axial distanziert, wodurch der Lichtbogen (4) zwischen den Werkstückrändern (19,20), insbesondere deren bevorzugt planen Stirnseiten gezündet wird und dann unter Wirkung der Treibeinrichtung (10) umläuft bzw. rotiert.

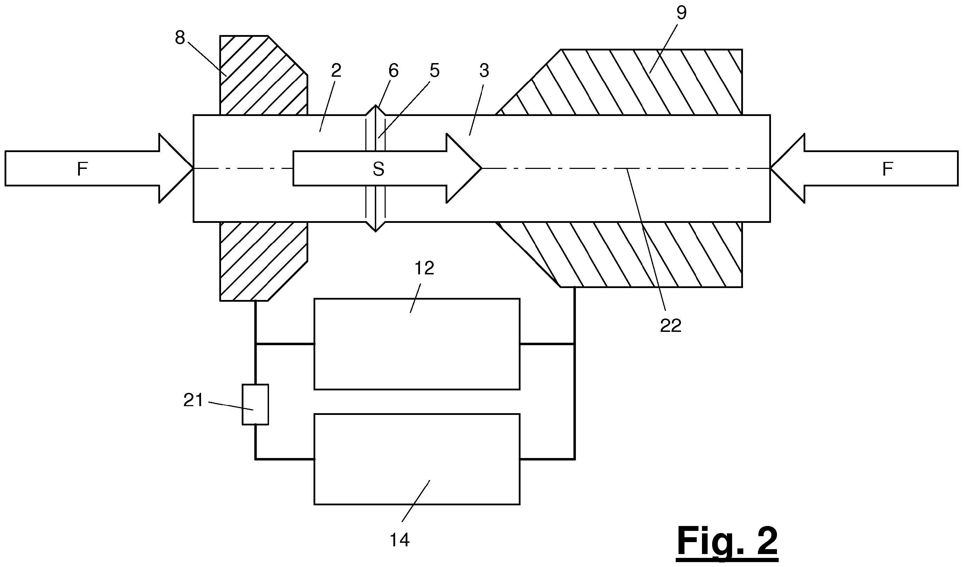

Der umlaufende Lichtbogen (4) erwärmt die Werkstückränder (19,20) und plastifiziert diese, wobei er sie insbesondere aufschmilzt. Sobald an beiden Werkstückrändern (19,20) eine ausreichende Schmelzeschicht gebildet ist, werden die Werkstücke (2,3) durch die Vorschubeinrichtung (11) wieder aneinander angenähert, in Kontakt gebracht und mit einer axialen Stauchkraft (F) gegeneinander gedrückt. Hierbei werden die Werkstücke (2,3) an ihren Werkstückrändern (19,20) durch eine Schweißung verbunden und bilden zwischen sich einen in Figur 2 dargestellten ringförmigen Fügebereich (5) aus. Beim Stauchen wird die Schmelze nach außen gedrängt und formt einen in Figur 2 dargestellten Wulst (6) aus. Hierbei werden etwaige Werkstoffverunreinigungen, z.B. Oxide, in der Schmelze mitgenommen und aus dem Füge- oder Nahtbereich (5) nach außen gedrängt. Der Wulst (6) kann später abgetrennt werden. Im Füge- oder Nahtbereich (5) gehen die Werkstücke (2,3) eine Schweißverbindung ein.

Die Schweißeinrichtung (1) weist eine zusätzliche Erwärmungseinrichtung (13) auf, mit der die durch Kontakt und Stauchung verbundenen Werkstücke (2,3) zusätzlich erwärmt werden können. Die Erwärmung kann während des Kontakts und der Stauchung beginnen und danach eine Zeitlang andauern. Die Erwärmung kann alternativ zeitversetzt nach der Stauchung starten. Durch die zusätzliche Erwärmung kann das Wärmeverhalten, insbesondere das Abkühlverhalten der verbundenen Werkstücke (2,3) beeinflusst werden. Dies kann durch eine Steuerung von Zeit und Temperatur der Erwärmungseinrichtung (13) geschehen. Während der Erwärmung kann die von der Vorschubeinrichtung (11) auf die Werkstücke (2,3) ausgeübte axiale Kraft (F) aufrecht erhalten bleiben und gesteuert oder geregelt werden. Hierbei können auch die Werkstückverkürzung sowie die Maßhaltigkeit in Stauchrichtung gesteuert oder geregelt werden.

Die Erwärmungseinrichtung (13) kann in beliebig geeigneter Weise ausgebildet sein. Im gezeigten und bevorzugten Ausführungsbeispiel ist sie als weitere elektrische Stromquelle (14) ausgebildet, die mit den Werkstücken (2,3) elektrisch leitend verbunden ist. Die weitere elektrische Stromquelle (14) bildet eine sog. Erwärmungs-Stromquelle. Die Beeinflussung des Abkühlverhaltens der verbundenen Werkstücke (2,3) kann durch Steuerung von Zeit, Strom und ggf. Frequenz der weiteren elektrischen Stromquelle (14) erfolgen.

Die weitere Stromquelle (14) kann ebenfalls als Gleichstromquelle ausgebildet sein, wobei sie z.B. einen gepulsten und durch Pulsweitenmodulation oder Pulsfrequenzmodulation oder auf andere Weise in der Leistung steuerbaren oder regelbaren Gleichstrom abgibt. Vorzugsweise kommt eine Mittelfrequenz-Gleichstromquelle zum Einsatz, die z.B. eine Frequenzbereich von ca. 500 bis 1.000 Hz für den gepulsten Gleichstrom aufweist. Sie kann in der in Figur 1 dargestellten Weise parallel zur Stromquelle (12) für den Lichtbogen (4) angeordnet und geschaltet sein. Beide Stromquellen (12,14) haben bevorzugt die gleiche Polung. Durch die weitere Stromquelle (14) wird gemäß Figur 2 ein Strom (S) durch die am Fügebereich (5) miteinander verbundenen Werkstücke (2,3) geleitet.

In einer Variante ist es möglich, für die Erwärmung eine Stromquelle (14) mit Wechselstrom einzusetzen, wobei über Schaltelemente die Schweißstromquelle (12) für den Lichtbogen vom Prozess getrennt und die Stromquelle (14) verbunden wird.

Im Fügebereich (5) haben die Werkstücke (2,3) bzw. deren Randbereiche (19,20) nach der Lichtbogenerwärmung eine erhöhte Temperatur, was zu einer Erhöhung des elektrischen Widerstands und zu einer Stromerwärmung des Fügebereichs (5) führt. Außerdem können die Werkstücke (2,3) unterschiedliche elektrische Leitfähigkeiten bzw. unterschiedliche elektrische Widerstände aufweisen und sich dementsprechend auch außerhalb des Fügebereichs (5) durch den Strom (S) unterschiedlich erwärmen.

Die weitere Stromquelle (14) ist ebenfalls Bestandteil der Schweißeinrichtung (1) und ist bevorzugt ebenfalls im Maschinengestell (7) angeordnet. Die Stromquellen (12,14) können als separate und in geeigneter Weise, insbesondere parallel, geschaltete Stromquellen ausgebildet sein. Sie können alternativ zu einer gemeinsamen Stromquelle mit entsprechender Auslegung und Beschaltung kombiniert sein.

Die Schweißeinrichtung (1) weist eine Steuerung (15) auf, die bevorzugt als gemeinsame Steuerung für die verschiedenen Komponenten der Schweißeinrichtung (1) ausgebildet ist. Die Stromquelle (12) und die Erwärmungseinrichtung (13), insbesondere die Stromquelle (14) sind jeweils steuerbar und können ggf. geregelt werden. Sie sind bevorzugt mit der gemeinsamen Steuerung (15) verbunden.

Die Vorschubeinrichtung (11) ist ebenfalls steuerbar und vorzugsweise regelbar. Hierbei können der Vorschubweg und/oder die Kraft (F) gesteuert oder geregelt werden. Die Vorschubeinrichtung (11) kann ebenfalls mit der gemeinsamen Steuerung (15) verbunden sein.

Die Schweißeinrichtung (1) kann ferner eine Messeinrichtung (16) aufweisen. Diese kann ebenfalls mit der Steuerung (15) verbunden sein. Die Messeinrichtung (16) kann ein oder mehrere Messelemente aufweisen.

Ein Messelement kann z.B. ein in Figur 1 gezeigter Wegmesser (17) sein, mit dem der axiale Weg der mit der Vorschubeinrichtung (11) verbundenen Einspannung (9) gemessen wird. Alternativ oder zusätzlich kann der axiale Weg des bewegten Werkstücks (3) gemessen werden. Falls das andere Werkstück (2) ebenfalls von einer beweglichen Einspannung (8) gehalten ist, kann auch dieser Weg gemessen werden. Ferner kann die Werkstückverkürzung bzw. die sich einstellende Gesamtlänge des geschweißten Werkstücks mit einem geeigneten Messelement erfasst werden.

Die Messeinrichtung (16) kann ferner einen Temperaturmesser (18) zur direkten Erfassung der Werkstücktemperatur im Fügebereich (5) und ggf. auch an anderen Stellen des oder der Werkstücke (2,3) aufweisen. Die Werkstücktemperatur kann alternativ oder zusätzlich auf mittelbarem Weg über die Leistung der zusätzlichen Erwärmungseinrichtung (13) erfasst werden. Hierfür kann z.B. im Stromkreis der bevorzugten Stromquelle (14) ein geeigneter Sensor (21), z.B. ein Stromsensor, eingesetzt werden. Alternativ ist eine mittelbare Regelung von R über U/I möglich.

Die Steuerung (15) kann programmierbar sein. Sie kann insbesondere verschiedene Programme zum Schweißen verschiedener Werkstücke (2,3) aufweisen. Sie kann auch eine Technologie-Datenbank beinhalten.

Bei dem erfindungsgemäßen Schweißprozess werden zunächst in der vorbeschriebenen Weise die axial distanzierten Werkstückränder (19,20) durch den umlaufend getriebenen Lichtbogen (4) angeschmolzen. Die Einwirkzeit des Lichtbogens (4) kann gegenüber den vorbekannten und in der Beschreibungseinleitung genannten Schweißprozessen verkürzt sein. Die Wirkzeit kann so groß bemessen sein, dass an beiden Werkstückrändern (19,20) gerade eine ausreichend dicke Schmelzschicht gebildet wird. Eine weitere und tiefer gehende Erwärmung der angrenzenden Werkstückbereiche ist nicht erforderlich. Die Schmelzebildung und die hierfür erforderliche Einwirkzeit können durch ein entsprechendes Messelement der Messeinrichtung (16) oder empirisch durch Versuche mit den Werkstückpaarungen bestimmt werden.

Sobald ausreichende Schmelzeschichten gebildet sind, werden die Werkstücke (2,3) axial aufeinander zubewegt, mit den aufgeschmolzenen Werkstückrändern (19,20) in Kontakt gebracht und mit der axialen Kraft (F) gestaucht. Dies kann durch die gesteuerte oder geregelte Vorschubeinrichtung (11) geschehen. Mit der Messeinrichtung (16) werden hierbei der Vorschubweg des oder der bewegten Werkstücke (2,3) und ggf. die durch Schmelzeverdrängung und Wulstbildung eintretende Verkürzung der verbundenen Werkstücke (2,3) gemessen.

Mit Eintritt des Werkstückkontakts oder kurz danach wird die Erwärmungseinrichtung (13), insbesondere die weitere Stromquelle (14), aufgeschaltet. Die für den Lichtbogen (4) zuständige Stromquelle (12) kann zu einem geeigneten Zeitpunkt abgeschaltet werden. Dies kann z.B. gleichzeitig oder anschließend zur Erzielung eines nahtlosen oder überlappenden Prozesses geschehen. Auch eine vorherige Abschaltung ist möglich. Durch den von der Stromquelle (14) verursachten Strom (S) werden die im Fügebereich (5) verbundenen Werkstücke (2,3) konduktiv erwärmt. Die dortige Werkstücktemperatur kann dabei gehalten, ggf. auch gesteigert, sowie kontrolliert abgesenkt werden.

Die Erwärmungseinrichtung (13), insbesondere die Stromquelle (14), kann zur Erzielung eines gewünschten Temperaturverhaltens, insbesondere eines Abkühlverhaltens, der gefügten Werkstücke (2,3) gesteuert oder geregelt werden. Bei der Stromquelle (14) werden hierbei Dauer und Stromhöhe des Gleichstroms gesteuert oder geregelt.

Die Gefügeausbildung metallischer Werkstücke, insbesondere im Fügebereich (5), ist einerseits von der Ausgangstemperatur und andererseits von der Abkühlgeschwindigkeit abhängig. Das Abkühlverhalten und die zugehörige Gefügeausbildung sind in sogenannten Zeit-Temperatur-Diagrammen (ZTU-Diagrammen) erfasst. Durch eine gesteuerte oder geregelte Abkühlung, insbesondere eine verlangsamte Abkühlgeschwindigkeit, können die gewünschten Gefügeausbildungen im Fügebereich (5) und ggf. auch in angrenzenden Werkstückbereichen, eingestellt werden. Bei eisenhaltigen Werkstoffen kann z.B. eine Perlitbildung zur Verbesserung der Zähigkeit und Duktilität veranlasst werden. Andererseits können bei eisenhaltigen Werkstoffen unerwünschte Aufhärtungen und Versprödungen vermieden werden, die z.B. beim Stand der Technik durch eine zu schnelle Abkühlung hervorgerufen wurden. Auch bei Nichteisenmetallen kann die Gefügeausbildung, z.B. über Phasenausscheidungen oder dgl., in der gewünschten Weise beeinflusst werden.

Das Temperatur- und Abkühlverhalten kann nach empirisch ermittelten Vorgaben gesteuert werden. Andererseits ist auch eine Regelung möglich, z.B. über die vorerwähnte direkte oder mittelbare Temperaturerfassung am Schweiß- und Fügebereich (5) mittels Messelementen (18,21). Die Steuerung bzw. Regelung kann anhand vorgegebener Programme in der Steuerung (15) erfolgen. Eine Steuerung bzw. Regelung kann die Zeit, insbesondere die Dauer, und/oder die eingebrachte Energie der zusätzlichen Erwärmung, insbesondere die elektrische Leistung und/oder die Stromstärke, betreffen.

Bei der zusätzlichen Erwärmung kann die Kraft (F) aufrecht erhalten und dabei gesteuert oder geregelt werden. Hierbei kann auch eine weitere Annäherung der Werkstücke (2,3) und eine entsprechende Werkstückverkürzung eintreten, die mit der Messeinrichtung (16) erfasst wird/werden. Die Kraft (F) kann dabei nach dem erfassten Weg gesteuert oder geregelt werden, um eine gewünschte Gesamtlänge des geschweißten Werkstücks in Stauchrichtung (22) einzustellen.

Mit der Erwärmungseinrichtung (13), insbesondere der Stromquelle (14), kann ferner die Temperatur im Fügebereich (5) so hoch und ggf. zeitweise konstant gehalten werden, dass die vorgenannte weitere Werkstückverkürzung und ein Fließen des oder der Werkstoffe im Fügebereich (5) unter der Kraft (F) möglich sind. Die mit der Kraft (F) erzeugte Druckspannung liegt dabei höher als die Fließspannung der Werkstoffe im Fügebereich (5). Mit der Erwärmungseinrichtung (13), insbesondere der Stromquelle (14), können auch Temperatur- oder Wärmeprofile mit Aufheizung und Abkühlung, ggf. im mehrfachen Wechsel, gefahren werden.

Abwandlungen der gezeigten und beschriebenen Ausführungsformen sind in verschiedener Weise möglich. Mit der Schweißeinrichtung (1) und dem Schweißverfahren können bei geeigneter Ausbildung mehr als zwei Werkstücke miteinander verschweißt werden. Die Schweißeinrichtung (1) kann insbesondere als sogenannte Doppelkopf-Schweißmaschine ausgebildet sein, bei der ein zentrales Werkstück in einer ggf. verschieblichen Einspannung gehalten wird und an beiden axialen Stirnseiten mit jeweils benachbarten Werkstücken in Richtung der Achse (22) verschweißt wird. Hierbei können die Stromquelle (12), die Treibeinrichtung (10) und die Erwärmungseinrichtung (13), insbesondere die Stromquelle (14) entsprechend mehrfach vorhanden sein. Ferner sind Schweißungen von quer oder schräg zueinander ausgerichteten Werkstücken möglich. In der gezeigten Ausführung von Figur 1 und 2 ist die Bewegungs- und Stauchachse (22) horizontal ausgerichtet. Alternativ kann sie bei entsprechender Maschinenausbildung, z.B. gemäß der WO 2009/130 131 A1, vertikal oder auch schräg ausgerichtet sein.

Zur Vorbereitung der zu schweißenden Werkstückbereiche kann bei der gezeigten Ausführungsform und den anderen genannten Varianten eine Abdreheinrichtung zum spanabhebenden oder anderweitigen Plandrehen oder Ebnen bzw. Ausrichten der Werkstückränder (19,20) vorhanden sein.

Ferner können die Merkmale der vorbeschriebenen Ausführungsbeispiele und ihrer Abwandlungen beliebig miteinander kombiniert, insbesondere auch vertauscht, werden.

### BEZUGSZEICHENLISTE

- 1: Schweißeinrichtung
- 2: Werkstück
- 3: Werkstück
- 4: Lichtbogen
- 5: Fügebereich
- 6: Wulst
- 7: Maschinengestell
- 8: Einspannung
- 9: Einspannung
- 10: Treibeinrichtung für Lichtbogen
- 11: Vorschubeinrichtung
- 12: Stromquelle für Lichtbogen
- 13: Erwärmungseinrichtung
- 14: Stromquelle für konduktive Erwärmung
- 15: Steuerung
- 16: Messeinrichtung
- 17: Messelement, Wegmesser
- 18: Messelement, Temperaturmesser
- 19: Werkstückrand
- 20: Werkstückrand
- 21: Messelement, Stromsensor
- 22: Achse, Stauchachse, Stauchrichtung

- F: Kraft, Stauchkraft
- S: Strom

## Patentansprüche

1. Schweißeinrichtung zum Schweißen von Werkstücken (2,3) mit einem umlaufend bewegten, insbesondere magnetisch bewegten, Lichtbogen (4), wobei die Schweißeinrichtung (1) eine Vorschubeinrichtung (11) für ein Werkstück (2,3) und eine Stromquelle (12) sowie eine Treibeinrichtung (10) für den Lichtbogen (4) aufweist, **dadurch gekennzeichnet, dass** die Schweißeinrichtung (1) eine zusätzliche Erwärmungseinrichtung (13) zum Erwärmen der verbundenen Werkstücke (2,3) an deren Fügebereich (5) aufweist, wobei die Erwärmungseinrichtung (13) als weitere Stromquelle (14) ausgebildet ist, die mit den Werkstücken (2,3) elektrisch leitend verbindbar ist, so dass die Stromquelle (14) die verbundenen Werkstücke (2,3) an deren Fügebereich (5) durch einen elektrischen Stromfluss zusätzlich konduktiv erwärmt, wobei die Stromquelle (14) zur Erzielung eines gewünschten Temperaturverhaltens, insbesondere eines Abkühlverhaltens, der gefügten Werkstücke (2,3) steuerbar oder regelbar ist.

2. Schweißeinrichtung nach Anspruch 1, **dadurch gekennzeichnet, dass** die weitere Stromquelle (14) als Gleichstromquelle, insbesondere als Mittelfrequenz-Gleichstromquelle, ausgebildet ist.

3. Schweißeinrichtung nach Anspruch 1 oder 2, **dadurch gekennzeichnet, dass** die Stromquellen (12,14) parallel geschaltet sind.

4. Schweißeinrichtung nach Anspruch 1, 2 oder 3, **dadurch gekennzeichnet, dass** die Schweißeinrichtung (1) eine Messeinrichtung (16) für mindestens eine prozessrelevante Größen, insbesondere Vorschubweg, Werkstückverkürzung, Erwärmungsleistung und/oder Fügestellentemperatur, aufweist.

5. Schweißeinrichtung nach einem der vorhergehenden Ansprüche, **dadurch gekennzeichnet, dass** die Schweißeinrichtung (1) derart gesteuert ist, dass die Werkstücke (2,3) an ihren benachbarten Werkstückrändern (19,20) mit dem bewegten Lichtbogen (4) aufgeschmolzen, danach unter Druck in Kontakt gebracht, verbunden und dabei im Fügebereich (5) mit der weiteren Stromquelle (14) derart gesteuert oder geregelt erwärmt werden, dass sich ein vorbestimmtes Temperaturverhalten einstellt.

6. Verfahren zum Schweißen von Werkstücken (2,3) mit einem umlaufend bewegten, insbesondere magnetisch bewegten, Lichtbogen (4), wobei die Werkstücke (2,3) an ihren benachbarten, distanzierten Werkstückrändern (19,20) mit dem bewegten Lichtbogen (4) aufgeschmolzen, danach mittels einer Vorschubeinrichtung (11) unter Druck in Kontakt gebracht und miteinander verbunden werden, **dadurch gekennzeichnet, dass** die verbundenen Werkstücke (2,3) an deren Fügebereich (5) durch einen elektrischen Stromfluss aus einer weiteren Stromquelle (14) zusätzlich konduktiv erwärmt werden.

7. Verfahren nach Anspruch 6, **dadurch gekennzeichnet, dass** die zuätzliche Erwärmung durch den elektrischen Stromfluss während des Kontakts und der Stauchung der Werkstücke (2,3) beginnt und danach eine Zeitlang andauert.

8. Verfahren nach Anspruch 6, **dadurch gekennzeichnet, dass** die zuätzliche Erwärmung durch den elektrischen Stromfluss nach der Stauchung startet und danach eine Zeitlang andauert.

9. Verfahren nach Anspruch 6, 7 oder 8, **dadurch gekennzeichnet, dass** mit einer Messeinrichtung (16) mindestens eine prozessrelevante Größe, insbesondere Vorschubweg, Werkstückverkürzung, Erwärmungsleistung und/oder Fügestellentemperatur, erfasst wird.

10. Verfahren nach einem der Ansprüche 6 bis 9, **dadurch gekennzeichnet, dass** mit der zuätzlichen Erwärmung durch den elektrischen Stromfluss das Wärmeverhalten, insbesondere das Abkühlverhalten der verbundenen Werkstücke (2,3) gesteuert oder geregelt wird.

11. Verfahren nach einem der Ansprüche 6 bis 10, **dadurch gekennzeichnet, dass** bei der zuätzlichen Erwärmung durch den elektrischen Stromfluss die von der Vorschubeinrichtung (11) auf die Werkstücke (2,3) ausgeübte axiale Kraft (F) aufrecht erhalten bleibt.

12. Verfahren nach einem der Ansprüche 6 bis 11, **dadurch gekennzeichnet, dass** mit dem Schweißverfahren eine gewünschte Werkstoffeigenschaft, insbesondere eine gewünschte Gefügeausbildung, der verbundenen Werkstücke (2,3) und/oder eine gewünschte Wulstbildung und/oder eine Werkstückverkürzung beim Stauchen und ggf. die Gesamtlänge des geschweißten Werkstücks eingestellt wird.

13. Verfahren nach einem der Ansprüche 6 bis 12, **dadurch gekennzeichnet, dass** die Einbringung der zum Schweißen erforderlichen Energie auf den Energieeintrag vom Lichtbogen und von der zusätzlichen Erwärmung durch den elektrischen Stromfluss verteilt wird.

14. Verfahren nach einem der Ansprüche 6 bis 13, **dadurch gekennzeichnet, dass** Werkstücke (2,3) mit großen Unterschieden in der Wandstärke und/oder dem Werkstoff geschweißt werden.

15. Verfahren nach einem der Ansprüche 6 bis 14, **dadurch gekennzeichnet, dass** elektrisch leitende Werkstücke (2,3) geschweißt werden.

## Claims

1. Welding installation for welding workpieces (2, 3), having an electric arc (4) that moves in a revolving, in particular magnetic, manner, wherein the welding installation (1) has an advancing installation (11) for a workpiece (2, 3) and a current source (12) and a propelling installation (10) for the electric arc (4), **characterized in that** the welding installation (1) has an additional heating installation (13) for heating the connected workpieces (2, 3) at the joining region (5) thereof, wherein the heating installation (13) is configured as a further current source (14) which is connectable to the workpieces (2, 3) in an electrically conducting manner such that the current source (14) by way of an electric current flow additionally heats the connected workpieces (2, 3) at the joining region (5) thereof in a conductive manner, wherein the current source (14) is controllable in an open loop or a closed loop for attaining a desired temperature behaviour, in particular a cooling behaviour, of the joined workpieces (2, 3).

2. Welding installation according to Claim 1, **characterized in that** the further current source (14) is configured as a DC current source, in particular as a medium-frequency DC current source.

3. Welding installation according to either of Claims 1 and 2, **characterized in that** the current sources (12, 14) are connected in parallel.

4. Welding installation according to Claims 1, 2, or 3, **characterized in that** the welding installation (1) has a measuring installation (16) for at least one process-relevant variable, in particular the advancement path, the workpiece shortening, the heating output, and/or the joining location temperature.

5. Welding installation according to one of the preceding claims, **characterized in that** the welding installation (1) is controlled in such a manner that the workpieces (2, 3) at the adjacent workpiece peripheries (19, 20) thereof are fused by the moving electric arc (4), thereafter are brought into contact under pressure, are connected and hereby in the joining region (5) by way of the further current source (14) are heated in an open-loop or closed-loop controlled manner in such a manner that a predetermined temperature behaviour is initiated.

6. Method for welding workpieces (2, 3) by way of an electric arc (4) that moves in a revolving, in particular magnetic, manner, wherein the workpieces (2, 3) at the adjacent distal workpiece peripheries (19, 20) thereof are fused by the moving electric arc (4), thereafter by means of an advancing installation (11) are brought into contact under pressure, and are interconnected, **characterized in that** the connected workpieces (2, 3) at the joining region (5) thereof are additionally conductively heated by an electric current flow from a further current source (14).

7. Method according to Claim 6, **characterized in that** the additional heating by the electric current flow commences during the contact with and the compression of the workpieces (2, 3) and thereafter continues for a period of time.

8. Method according to Claim 6, **characterized in that** the additional heating by the electric current flow commences after the compression and thereafter continues for a period of time.

9. Method according to Claim 6, 7, or 8, **characterized in that** at least one process-relevant variable, in particular the advancement path, the workpiece shortening, the heating output, and/or the joining location temperature are/is detected by a measuring installation (16).

10. Method according to one of Claims 6 to 9, **characterized in that** the thermal behaviour, in particular the cooling behaviour, of the connected workpieces (2, 3) is controlled in an open loop or closed loop by way of the additional heating by the electric current flow.

11. Method according to one of Claims 6 to 10, **characterized in that** the axial force (F) that is exerted by the advancing installation (11) on the workpieces (2, 3) is maintained in the additional heating by way of the electric current flow.

12. Method according to one of Claims 6 to 11, **characterized in that** a desired material property, in particular a desired microstructure configuration, of the connected workpieces (2, 3), and/or a desired bead formation, and/or a workpiece shortening in the compression, and optionally the overall length of the welded workpiece, is set by way of the welding method.

13. Method according to one of Claims 6 to 12, **characterized in that** the incorporation of the energy required for welding is distributed between the energy input of the electric arc and of the additional heating by the electric current flow.

14. Method according to one of Claims 6 to 13, **characterized in that** workpieces (2, 3) that have large differences in the wall thickness and/or the material are welded.

15. Method according to one of Claims 6 to 14, **characterized in that** electrically conducting workpieces (2, 3) are welded.

## Revendications

1. Dispositif de soudage pour souder des pièces (2, 3) avec un arc électrique (4) en mouvement circulaire, notamment mis en mouvement magnétiquement, le dispositif de soudage (1) possédant un dispositif d'avance (11) pour une pièce (2, 3) et une source de courant (12) ainsi qu'un dispositif d'excitation (10) pour l'arc électrique (4), **caractérisé en ce que** le dispositif de soudage (1) possède un dispositif de chauffage (13) supplémentaire destiné à faire chauffer les pièces (2, 3) assemblées au niveau de leur zone d'aboutage (5), le dispositif de chauffage (13) étant réalisé sous la forme d'une source de courant (14) supplémentaire qui peut être reliée électriquement avec les pièces (2, 3), de sorte que la source de courant (14) fait en plus chauffer les pièces (2, 3) assemblées au niveau de leur zone d'aboutage (5) par conduction par un flux de courant électrique, la source de courant (14) pouvant être commandée ou régulée pour obtenir un régime de température souhaité, notamment un régime de refroidissement, des pièces (2, 3) aboutées.

2. Dispositif de soudage selon la revendication 1, **caractérisé en ce que** la source de courant (14) supplémentaire est réalisée sous la forme d'une source de courant continu, notamment sous la forme d'une source de courant continu à moyenne fréquence.

3. Dispositif de soudage selon la revendication 1 ou 2, **caractérisé en ce que** les sources de courant (12, 14) sont branchées en parallèle.

4. Dispositif de soudage selon la revendication 1, 2 ou 3, **caractérisé en ce que** le dispositif de soudage (1) possède un dispositif de mesure (16) pour au moins une grandeur concernant le processus, notamment la course d'avance, le raccourcissement de la pièce, la puissance de chauffage et/ou la température du point d'aboutage.

5. Dispositif de soudage selon l'une des revendications précédentes, **caractérisé en ce que** le dispositif de soudage (1) est commandé de telle sorte que les pièces (2, 3) sont mises en fusion avec l'arc électrique (4) en mouvement au niveau de leurs bords de pièce (19, 20) voisins, sont ensuite mises en contact sous pression, assemblées et, à cette occasion, chauffées dans la zone d'aboutage (5) de manière commandée ou régulée avec la source de courant (14) supplémentaire de telle sorte qu'un régime de température prédéfini s'établisse.

6. Procédé pour souder des pièces (2, 3) avec un arc électrique (4) en mouvement circulaire, notamment mis en mouvement magnétiquement, les pièces (2, 3) étant mises en fusion avec l'arc électrique (4) en mouvement au niveau de leurs bords de pièce (19, 20) voisins espacés, étant ensuite mises en contact sous pression au moyen d'un dispositif d'avance (11) et assemblées ensemble, **caractérisé en ce que** les pièces (2, 3) assemblées sont en plus mises à chauffer au niveau de leur zone d'aboutage (5) par conduction par un flux de courant électrique provenant d'une source de courant (14) supplémentaire.

7. Procédé selon la revendication 6, **caractérisé en ce que** le chauffage supplémentaire par le flux de courant électrique commence pendant la mise en contact et l'écrasement des pièces (2, 3) et il est ensuite maintenu pendant une durée donnée.

8. Procédé selon la revendication 6, **caractérisé en ce que** le chauffage supplémentaire par le flux de courant électrique commence après l'écrasement et il est ensuite maintenu pendant une durée donnée.

9. Procédé selon la revendication 6, 7 ou 8, **caractérisé en ce qu'**au moins une grandeur concernant le processus, notamment la course d'avance, le raccourcissement de la pièce, la puissance de chauffage et/ou la température du point d'aboutage est acquise avec un dispositif de mesure (16).

10. Procédé selon l'une des revendications 6 à 9, **caractérisé en ce que** le régime thermique, notamment le régime de refroidissement des pièces (2, 3) assemblées, est commandé ou régulé avec le chauffage supplémentaire par le flux de courant électrique.

11. Procédé selon l'une des revendications 6 à 10, **caractérisé en ce que** lors du chauffage supplémentaire par le flux de courant électrique, la force axiale (F) exercée par le dispositif d'avance (11) sur les pièces (2, 3) reste maintenue.

12. Procédé selon l'une des revendications 6 à 11, **caractérisé en ce qu'**une propriété souhaitée du matériau, notamment une configuration souhaitée de la structure, des pièces (2, 3) assemblées et/ou une formation souhaitée du cordon et/ou un raccourcissement souhaité des pièces lors de l'écrasement et éventuellement la longueur totale de la pièce soudée sont réglés avec le procédé de soudage.

13. Procédé selon l'une des revendications 6 à 12, **caractérisé en ce que** l'apport de l'énergie nécessaire pour le soudage est distribué sur la charge énergétique de l'arc électrique et le chauffage supplémentaire par le flux de courant électrique.

14. Procédé selon l'une des revendications 6 à 13, **caractérisé en ce que** des pièces (2, 3) qui présentent des différences importantes au niveau de l'épaisseur de paroi et/ou du matériau sont soudées.

15. Procédé selon l'une des revendications 6 à 14, **caractérisé en ce que** des pièces (2, 3) électriquement conductrices sont soudées.
